Europäisches Patentamt

European Patent Office

Office européen des brevets

(19)

(11) Publication number: **0 083 046**
**A2**

# (12) EUROPEAN PATENT APPLICATION

(21) Application number: **82111774.4**

(22) Date of filing: **18.12.82**

(51) Int. Cl.³: **B 65 B 61/00**
**B 32 B 27/00, B 32 B 31/08**

(30) Priority: **29.12.81 SE 8107822**

(43) Date of publication of application:
**06.07.83 Bulletin 83/27**

(84) Designated Contracting States:
**AT BE CH DE FR GB IT LI NL SE**

(71) Applicant: **Tetra Pak International AB**
**Box 1701**
**S-221 01 Lund(SE)**

(72) Inventor: **Nilsson, Bengt Gunnar**
**Mossavägen 26**
**S-240 17 Södra Sandby(SE)**

(72) Inventor: **Harrysson, Göran Kent**
**Korsgatan 9 A**
**S-223 53 Lund(SE)**

(74) Representative: **Bentz, Christer**
**TETRA PAK INTERNATIONAL AB Patent Department**
**Fack 1701**
**S-221 01 Lund 1(SE)**

(54) **A laminated material and a method for manufacturing the same.**

(57) A laminated packing material with a sterile surface which is protected by a protective layer joined detachably to it. On rolling-up of the material web to a roll after its manufacture the turns forming the roll are joined to one another by means of an adhesive, which means that the roll will be wholly "tight" and consequently simple to handle during transport and storage without any danger of infection. When the laminate web is to be converted to packing containers, the turns forming the roll are separated from one another between the protective layer and the sterile surface on unwinding so that the unwound material obtains two outer sterile surfaces.

Fig.2

EP 0 083 046 A2

Croydon Printing Company Ltd.

A LAMINATED MATERIAL AND A METHOD FOR MANUFACTURING THE SAME

The present invention relates to a packing laminate web comprising
a carrier layer and layers of plastic material.  The invention also
relates to a method for manufacturing such a packing laminate web.

Aseptic packing containers of the non-returnable type used e.g. for
sterilized juice or milk are generally made of plastic  or plastic-laminated
material.  The packing material must be sterile or sterilized before it
is filled with the desired contents, if packing containers of long keeping
quality are to be obtained.

In the manufacture of e.g. milk packages, a laminated material in
the form of a web is used, which comprises a carrier layer of paper which,
on the side facing the contents, is provided with a layer of aluminium foil
and an external layer of thermoplastic material.  The opposite side of
the carrier layer too is covered with a thin layer of thermoplastic.
The packing laminate is sterilized immediately before, or during, the
conversion to packing containers by being brought into contact with a
sterilizing substance, usually hydrogen peroxide, and being subjected
to heat.  After the sterilizing agent has been removed again, the laminate
is formed to a tube by folding over, and joining in a liquid-tight manner,
the longitudinal edges of the laminate web.  After filling of the tube with
the desired contents,  the tube is sealed off by means of transverse seals
placed at equal intervals, so that individual packing containers filled
with sterile contents are produced.

In this and similar methods/it is also possible to use a presterilized
web in rolled-up form, which is supplied in a closed wrapping or a
cassette, which is inserted into the packing machine, whereupon the
laminate web is rolled off and is converted to filled packing containers
in the manner described above.  In doing this the whole forming process
naturally has to take place in a closed sterile chamber, so as to prevent
reinfection  of the packing material during the manufacture of the
filled packing containers.

This latter method brings with it certain advantages in that it
renders unnecessary any use of sterilizing agent in connection with the
forming and filling of the packing containers.  On the other hand, the
handling of the sterilized packing material is critical, since in order
to guarantee sterility every care must be taken to ensure that from the instant of sterilization right to, and including, the final forming of the filled packing containers, the material does not come into contact either with non-sterile objects or with bacteria present in the surrounding atmosphere. This means in practice that after the sterilization the packing laminate web has to be kept in a hermetically closed cassette, wherein it can be stored or transported to the packing machine. Moreover, the packing machine must be provided with a sterile chamber comprising some form of sluice which allows connection of the cassette. Since a very great number of cassettes are required, the method becomes expensive and this, together with the complicated handling procedure, is the reason that aseptic packing machines operate less frequently with presterilized webs, but instead are supplied with non-sterile webs which are sterilized by means of chemical agents and heat prior to conversion to individual packing containers.

It is an object of the present invention to provide a packing laminate web as well as a method for the manufacture of the same which makes it possible to avoid the aforementioned disadvantages, and to indicate a simpler technique for the manufacture of sterile packing containers from a packing material which has been sterilized beforehand.

It is a further object of the present invention to provide a sterile packing laminate web intended for the manufacture of sterile packing containers which is insensitive to surrounding bacteria and which, therefore, can be handled without being enclosed in bacteriaproof cassettes or other closed wrappings.

It is a further object of the present invention to provide a method for the manufacture of the said sterile packing laminate web, this method being simple and reliable and capable of being carried out without appreciable wastage and also with minimum other costs.

These and other objects have been achieved in accordance with the invention on the one hand in that a packing laminate web comprising a carrier layer and layers of plastic material has been given the characteristic that a first plastic layer is joined firmly to one side of the carrier layer, whilst a second plastic layer is joined detachably to this first plastic layer, and on the other hand in that a method for manufacturing a packing laminate web comprising a carrier layer and/plastic layer laminated to the same has been given the characteristic that in connection with the manufacture of the laminate the plastic layer is covered with an outer plastic layer which is joined detachably to the said first plastic layer, and that the outer plastic layer is diengaged again and transferred to the opposite side of the carrier layer before conversion of the packing laminate web to individual
packing containers.

Preferred embodiments of the packing laminate web as well as of the method
for the manufacture of the same have been given the characteristics
which are evident from the subsidiary claims 2 - 12 and 14 - 18 respectively.

A preferred embodiment of the packing laminate web and of the method
for the manufacture of the same will now be described in more detail with
special reference to the enclosed schematic drawing which only illustrates
the details required for the understanding of the invention.

Fig.1 shows on an enlarged scale a section through a part of a
packing laminate web in accordance with the invention during the rolling
up to a roll.

Fig.2 shows the packing laminate web in accordance with fig.1 during
the unwinding from the roll.

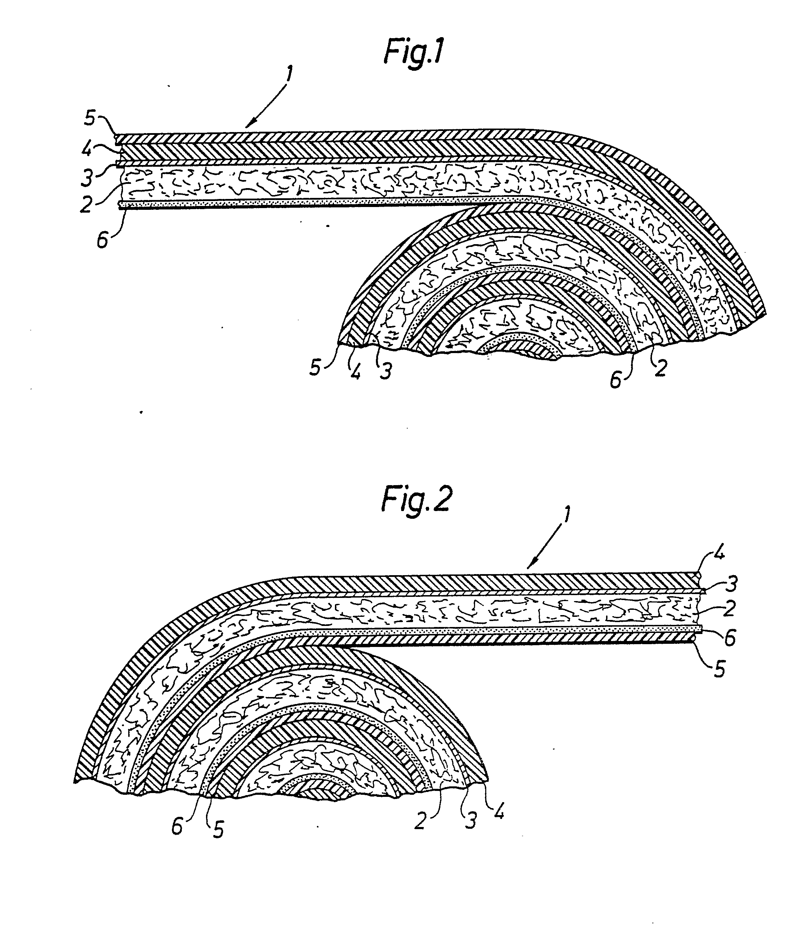

The packing laminate web 1 shown in fig.1 comprises a carrier layer 2
of fibrous material, preferably paper. The carrier layer has a thickness
of approx. 0.4 mm and its chief task consists in giving the packing laminate
the desired stiffness and stability. The impermeability of the packing
laminate to gas and light is usually improved with the help of a thin
aluminium foil 3 which is combined firmly with the fibrous material with
the help of an adhesive (not shown). The aluminium foil is placed on the
side of the fibrous material which subsequently will face towards the
contents, that is to say the side facing upwards in fig.1 as well as in
fig.2.

The carrier layer 2 is provided, moreover, with a first plastic layer 4
which consists of a thermoplastic material which is laminated and joined
firmly to the surface of the carrier layer 2 covered with aluminium foil.
The plastic layer 4 has a thickness of approx. 0.06mm.

A further layer of thermoplastic is joined in a detachable manner to
the first plastic layer 4 and thus forms a second plastic layer which
serves as a protective film which wholly covers the free surface of the
first plastic layer, facing away from the carrier layer 2. The second
plastic layer 5 has a thickness which substantially amounts to half the
thickness of the first plastic layer. The first as well as the second plastic
layer consist of a thermoplastic material, e.g. polyethylene. It is also
possible, especially for the second plastic layer or protective film 5, to
choose another thermoplastic, e.g. polystyrene or polypropylene. Between
the two plastic layers a further material layer (not shown) may be present
whose function it is to regulate the sealing and which thus serves to
control the adhesion between the two plastic layers so that the desired, predetermined, lamination strength is obtained.

Since the two plastic layers 4,5 are applied to the carrier layer 2 during the manufacture of the laminate by extrusion at high temperature, the surfaces of the two layers 4,5 facing one another remain free from bacteria and consequently sterile. Owing to the surfaces being joined to one another a break in the sterility is prevented when the plastic layers, after the extrusion, cool down again to a temperature where bacteria can survive.

The free surface of the carrier layer 2 is provided with a thin layer of an adhesive 6 which e.g. may be a sealing varnish. The sealing varnish may be hot or cold sealing, and it may be activated thus through the supply of heat prior to the rolling up of the packing laminate web to a roll or by means of the contact pressure arising in the roll between turns. With the help of the adhesive, the different turns of the winding in the roll of packing laminate web shown in fig.1 will thus be joined to one another, that is to say, the carrier layer 2 in one turn of the roll will be attached firmly by means of the adhesive 6 to the outer plastic layer, that is to say, the second plastic layer or protective film of the adjoining turn of the roll (situated nearest to the inside).

When the packing laminate web in accordance with the invention is rolled up in the form of a roll the different turns of the roll, therefore, will be joined firmly to one another, which makes it impossible for bacteria or other contaminations to penetrate between the different material layers or turns of the roll. On unwinding the packing laminate web from the roll, it is no longer possible to unwind the web in its original form, but the turns making up the roll must be separated at a new place, namely between the first and second plastic layers 4 and 5 respectively of the packing laminate, joined in a detachable manner. In this way, in the unwound condition of the laminate web, the carrier layer 2 will carry on its one side the first plastic layer 4 and on its opposite side the second plastic layer 5, which means that the sterile surfaces of the two plastic layers 4,5 previously facing one another are now exposed and form the two outer surfaces of the packing laminate web, as can be seen clearly from figure 2. In this manner a sterile packing laminate web has been obtained which is very suitable for conversion to individual packing containers in a packing machine of a previously known type.

The manufacture of the packing laminate web in accordance with the invention is initiated by a web of the fibrous carrier layer 2 being covered in conventional manner with a layer of aluminium foil 3 on one of its sides. Then the carrier layer is permitted to pass an extruder for the joint extrusion of the two plastic layers 4 and 5. The first, thicker, plastic layer 4 is extruded in this case at such a temperature that after the laminate web has passed between a pair of conventional pressure rollers (not shown), it is combined firmly with the surface of the carrier layer 2 which is covered with the aluminium foil 3. By means of the said joint extrusion the second plastic layer 5 (protective film) is also applied onto the first plastic layer 4. For this purpose the extrusion temperature chosen is such that, after the laminate web has passed the said pressure rollers, the second plastic layer is given an adhesion to the first plastic layer 4 adapted so that during a later stage of the manufacturing process it can be detached again from the same. However, the join between the two plastic layers must be sufficiently good so that bacteria cannot enter between the plastic surfaces facing each other.

The extrusion temperatures which are used in the extrusion of the two plastic layers are so high that any bacteria between the two films are with certainty destroyed, with the result that the surfaces of the two films facing each other will be completely sterile. The actual extrusion temperature will have to be adapted, of course, to the different types of thermoplastic material which are used, but the extrusion temperature used is still sufficiently high with all types of thermoplastics that any conceivable types of bacteria will be destroyed with a good margin.

After the application of the two plastic layers 4,5 to one side of the carrier layer 2, the free surface of the carrier layer 2 is provided with a thin layer of adhesive 6. The adhesive which, similarly to the plastic layers, can be applied by extrusion, may consist of a heat-melting glue, a so-called hotmelt, or some other known type of hot or cold sealing varnish.

The packing laminate web 1 has now been provided with all the desired material layers and, consequently, is rolled up to a roll. Prior to the rolling-up the packing laminate web may possibly be divided into a number of narrower webs by longitudinal cuts. The rolling-up may also be preceded by heating, or some type of activation, of the adhesive layer 6, so as to ensure that in the subsequent rolling-up to a compact roll it seals the different web turns to one another. In other words, the adhesive layer 6 will join adjacent turns of the roll to each other in such a manner that the carrier layer 2 in one turn of the roll is attached by means of the adhesive to the outer or second plastic layer 5 of the adjacent turn of the roll. Through a suitable choice of adhesive and contact pressure between the different turns of the winding it is ensured that the join between the
turns becomes durable, which means that after rolling-up the material
roll no longer consists of individual turns of packing laminate web, but
rather forms a compact lump of material. In this condition the
material roll can be stored and transported without a danger of the
.sterile surface between the two plastic layers 4,5 being exposed to
bacteria. Hence there is no need for a bacteria-proof wrapping to be
used, but it is sufficient if the material roll is provided in conventional
manner with a protective skin of shrink film so as to prevent coarser
impurities or moisture from damaging the material.

When the packing material web 1 is to be used and converted in a
packing machine to individual sterile packing containers, the material
roll is placed into a roll stand intended for this purpose in a packing
machine. In the subsequent unwinding of the packing laminate web the two
plastic layers 4,5 are separated from one another so that the two surfaces
of the unwound packing laminate web are covered with the first and second
plastic layer 4 and 5 respectively. The sterile surfaces of the plastic
layers 4,5, previously facing one another, will now face outwards,which
means that the packing material web obtains sterile external surfaces. The
unwinding must take place, therefore, in a sterile chamber, wherein the
continuous conversion of the packing material web to finished packing containers is carried out. At the same time a complementary sterilization of the
edge zones of the material web is required, e.g. a radiation sterilization,
if it has not been possible previously to protect these in some special
manner whilst the web was in the form of a roll. In the conversion to
packing containers, the first plastic layer 4 will be utilized as an inside
layer facing towards the contents, whilst the thinner, second, plastic layer 5
serves as an outer protective layer for the carrier layer. The two plastic
layers, owing to their thermoplastic properties, also make possible the
liquid-tight heat sealing of the laminate, and this is made use of during the
continued conversion to packing containers.

As mentioned earlier, the two plastic layers 4,5 may consist of any
thermoplastic material and combinations of different thermoplastics may
also be used. The thermoplastic used most commonly at present for the
packaging of foodstuffs is polyethylene,and this plastic is also very
appropriate for use in the manufacture of the packing laminate in accordance with the invention. In order to prevent excessive adhesion between
the layers, in cases where they consist of the same thermoplastic material,
it may be necessary to apply between the layers a very thin layer (release
layer)of some other polymer material, e.g. polystyrene, to regulate the

0083046

sealing.When the two layers 4,5 are manufactured of different types of thermoplastics, e.g. polyethylene - polystyrene or polyethylene-polypropylene, a less strong adhesion is obtained automatically, so that in such cases a layer regulating the sealing is generally dispensed with. The desired strength of adhesion is obtained here instead by adaptation of the temperature and compression force between the layers.

A suitable adhesion between two layers of the same plastic material may also be achieved by applying the film deposited last at a lower temperature. However, if this temperature has to be so low that there is a risk of the killing of the bacteria not being complete, it may be appropriate to aftersterilize the material by means of a sterilizing method with depth action, e.g. using an electron gun.

Within the scope of the main principle according to the invention, i.e. extrusion of two sterile plastic layers joined detachably to one another, rolling up of the laminate to a compact roll wherein the turns which form part thereof are joined to one another, and unwinding of the laminate in such a manner that the sterile plastic layers are separated and form outer surfaces of the laminate, other methods of manufacture and material combinations naturally may occur, since the type of package which is to be formed from the packing laminate necessarily must be allowed to determine the different material types which are included in the packing laminate web and consequently also the methods of manufacture.

The packing laminate and the method for the manufacture of the same as mentioned earlier, make it possible to handle the sterile material in a problem-free and simple manner with no danger of reinfection, without any of the safety measures required previously. The outer plastic layer used as a protective film is reused in accordance with the invention as an outer material layer which is favourable from a point of view of costs. The said layer can be provided in conventional manner, in connection with the manufacture of the laminate, with a desired decoration in the form of text and pictures which,however, have to be printed here in mirror-inverted form. Printing of the carrier layer in conventional manner is, of course, also possible.

CLAIMS

1. A packing laminate web (1) comprising a carrier layer (2) and layers (4,5) of plastic material,
c h a r a c t e r i z e d   i n   t h a t   a first plastic layer (4) is joined firmly to one side of the carrier layer (2), whilst a second plastic layer (5) is joined detachably to this first plastic layer (4).

2. A packing laminate web in accordance with claim 1,
c h a r a c t e r i z e d   i n   t h a t   the plastic layers (4,5) consist of thermoplastic material.

3. A packing laminate web in accordance with anyone of the preceding claims,
c h a r a c t e r i z e d   i n   t h a t   the first plastic layer (4) is substantially twice as thick as the second plastic layer (5).

4. A packing laminate web in accordance with anyone of the preceding claims,
c h a r a c t e r i z e d   i n   t h a t the surfaces of the two plastic layers facing towards one another are sterile.

5. A packing laminate web in accordance with anyone of the preceding claims,
c h a r a c t e r i z e d   i n   t h a t   the free surface of the carrier layer (2) is provided with a layer (6) of adhesive.

6. A packing laminate web in accordance with anyone of the preceding claims,
c h a r a c t e r i z e d   i n   t h a t   it is rolled-up to a roll wherein the turns forming it are joined firmly to one another.

7. A packing laminate web in accordance with claim 6,
c h a r a c t e r i z e d   i n   t h a t   the carrier layer (2) is joined firmly by means of the adhesive layer (6) to the outer plastic layer (5) of the adjacent turn of the roll.

8. A packing laminate web in accordance with anyone of claims 6 or 7,
c h a r a c t e r i z e d   i n   t h a t its carrier layer (2), in the unwound condition of the web (1) carries the first plastic layer (4) on its one side and the second plastic layer (5) on its opposite side.

9. A packing laminate web in accordance with anyone of the preceding claims,
c h a r a c t e r i z e d   i n   t h a t   the first as well as the second plastic layer (4,5) consist of polyethylene.

10. A packing laminate web in accordance with anyone of claims 1 to 9,
c h a r a c t e r i z e d   i n   t h a t   the first plastic layer (4) consists of polyethylene and the second plastic layer (5) of polystyrene.

0083046

11. A packing laminate web in accordance with anyone of claims 1 to 9, c h a r a c t e r i z e d   i n   t h a t the first plastic layer (4) consists of polyethylene and the second plastic layer (5) of polypropylene.

12. A packing laminate web in accordance with anyone of the preceding claims, c h a r a c t e r i z e d   i n   t h a t a layer regulating the sealing is applied between the first and the second plastic layer.

13. A method for the manufacture of a packing laminate web (1) comprising a carrier layer (2) and a plastic layer (4) laminated to it, c h a r a c t e r i z e d   i n   t h a t  the plastic layer (4) is covered in connection with the manufacture of the laminate with an outer plastic layer (5) which is joined detachably to the said first plastic layer (4) and that the outer plastic layer (5) is disengaged again and transferred to the opposite side of the carrier layer (2) before conversion of the packing laminate web to individual packing containers.

14. A method in accordance with claim 13, c h a r a c t e r i z e d   i n ·t h a t  the laminate (1),consisting of the carrier layer web and the two plastic layers (4,5) joined detachably to one another, is provided on  its one outer surface with a layer(6) of adhesive, that the adhesive is activated and the laminate web is rolled up to a compact roll wherein the different turns of the web are joined to one another,and that the laminate web is  unwound in that the plastic layers (4,5) joined detachably to one another are separated from each other so that the unwound web (1) presents plastic layers (4,5) on either side of the carrier layer (2).

15. A method in accordance with anyone of claims 13 or 14, c h a r a c t e r i z e d   i n ·t h a t  the surfaces of the two plastic layers (4,5) facing one another are sterilized,whereupon the laminate is rolled up to a roll wherein  adjacent turns of the  roll are joined to . one another by the outer plastic layer (5) being attached by means of the layer (6) of adhesive to the  carrier layer (2) of the adjacent turn.

16. A method in accordance with anyone of claims 14 or 15, c h a r a c t e r i z e d   i n   t h a t,  prior to rolling up of the web, the layer (6) of adhesive is activated by heating.

17. A method in accordance with anyone of claims 14 to 16, c h a r a c t e r i z e d   i n   t h a t  the two plastic layers (4,5) are extruded jointly.

18. A method in accordance with anyone of claims 14 to 17, c h a r a c t e r i z e d   i n   t h a t  the plastic layers (4,5) are extruded at such a temperature that their common connecting surface will be sterile.

Fig.1

Fig.2